# EUROPÄISCHE PATENTSCHRIFT

(11) **EP 2 626 514 B1**
(45) Veröffentlichungstag und Bekanntmachung des Hinweises auf die Patenterteilung: **12.04.2017**
(21) Anmeldenummer: 12154931.5
(22) Anmeldetag: 10.02.2012
(51) Int. Cl.: F01D 5/14, F01D 9/04

(54) **Strömungsmaschine**
Flow engine
Turbomachine

(43) Veröffentlichungstag der Anmeldung: 14.08.2013
(73) Patentinhaber: MTU Aero Engines AG, 80995 München (DE)
(72) Erfinder: Elorza Gomez, Sergio, 80997 München (DE); Schneider, Tim, 85221 Dachau (DE)

(56) Entgegenhaltungen:
- DE-A1-102009 013 399
- DE-T2- 69 730 663

## Beschreibung

Die Erfindung betrifft eine Strömungsmaschine nach dem Oberbegriff des Patentanspruchs 1.

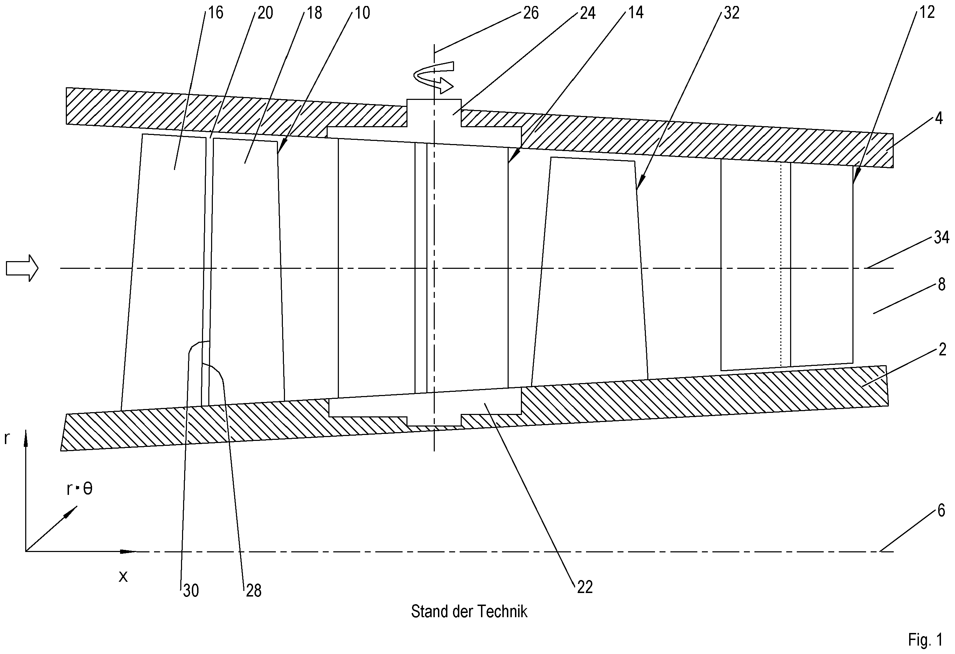

Die maximale Umlenkung einer Schaufelreihe einer Strömungsmaschine und somit deren aerodynamische Belastbarkeit ist zum einen durch eine Strömungsablösung am Schaufelprofil begrenzt. Zum anderen wird die maximale Umlenkung durch eine Ablösung einer Grenzschichtströmung an naben- und gehäuseseitigen Seitenwänden begrenzt. Zur Erhöhung der Umlenkfähigkeit von Schaufelreihen sind doppelreihige Schaufelanordnungen bekannt. Eine bekannte Strömungsmaschine mit einer derartigen Anordnung ist in Figur 1 gezeigt. Diese hat eine Nabe 2, die in einem Gehäuse 4 um eine sich in Längsrichtung x erstreckende Rotorachse 6 drehbar gelagert ist. Die Nabe 2 und das Gehäuse 4 begrenzen einen ringförmigen Hauptstrompfad 8, der gemäß dem waagerechten Pfeil von links nach rechts durchströmt wird und in dem beispielsweise eine rotorseitige Schaufelreihengruppe 10, eine statorseitige Schaufelreihengruppe 12 und eine verstellbare Schaufelreihengruppe 14 angeordnet ist. Die Schaufelreihengruppen 10, 12, 14 weisen jeweils zwei in Strömungsrichtung hintereinander angeordnete Schaufelreihen mit einer Vielzahl von Schaufeln 16, 18 auf. Aus Gründen der Übersichtlichkeit ist vorrangig die rotorseitige Schaufelreihengruppe 10 im Folgenden mit Bezugsziffern versehen. Die rotorseitige Schaufelreihengruppe 10 und die statorseitige Schaufelreihengruppe 12 sind jeweils fest mit der Nabe 2 bzw. mit dem Gehäuse 4 verbunden, wobei zwischen Blattspitzen der Schaufeln 16, 18 und dem Gehäuse 4 bzw. der Nabe 2 ein Spalt 20 gebildet ist. Die Schaufeln 16, 18 der verstellbaren Schaufelreihengruppe 14 sind endseitig jeweils an einem Drehteller 22,24 gelagert und gemäß dem Drehpfeil um eine Querachse 26 verschwenkbar. Die vorderen Schaufeln 16 haben jeweils eine den hinteren Schaufeln 18 zugewandte Hinterkante 28. Die hinteren Schaufeln 18 habenjeweils eine der vorderen Schaufeln 16 zugewandte Vorderkante 30. Die Kanten 28, 30 sind geradlinig ausgebildet und erstrecken sich radial nahezu quer zur Querstromrichtung, so dass zwischen den Kanten 28, 30 und somit zwischen den Schaufeln 16, 18 ein konstanter axialer Kantenabstand gebildet ist. Ferner ist zwischen den Kanten 28, 30 ein konstanter Kantenabstand in Umfangsrichtung gebildet. Des Weiteren ist in Figur 1 eine Schaufel 32 einer einzelnen Rotorschaufelreihe gezeigt.

Es hat sich jedoch gezeigt, dass im Seitenwandbereich, d.h. im Bereich der Nabe 2 und/oder des Gehäuses 4 aufgrund des Grenzschichteinflusses eine von einer Hauptstrompfadmitte 34 abweichende Schaufelkonturierung notwendig ist, mittels welcher die gegenüber der Hauptstrompfadmitte 34 geänderte Strömungsbedingungen im Seitenwandbereich berücksichtigt werden können. In der EP 2 261 463 A2 wird daher bei Schaufelreihengruppen vorgeschlagen, einen meridionalen Abstand zwischen den Hinterkanten der vorderen Schaufeln und den Vorderkanten der hinteren Schaufeln derart einzustellen, dass dieser von einer Hauptstrompfadmitte in Richtung einer naben- oder gehäuseseitigen Seitenwand zunimmt.

Weiterer druckschriftlicher Stand der Technik ist in dem Patent DE 697 30 663 T2 gezeigt. Dieses Patent betrifft eine Tandembeschaufelung, deren in Strömungsrichtung hintereinander angeordneten Schaufeln in Umfangsrichtung jeweils einen variierenden Kantenabstand aufweisen.

Aufgabe der Erfindung ist es, eine Strömungsmaschine mit optimierten Strömungsverhältnissen zu schaffen.

Diese Aufgabe wird gelöst durch eine Strömungsmaschine mit den Merkmalen des Patentanspruchs 1.

Eine erfindungsgemäße Strömungsmaschine hat zumindest eine Schaufelreihengruppe, die in einem Hauptstrompfad angeordnet ist und zumindest zwei in Hauptstromrichtung betrachtet benachbarte Schaufelreihen mit jeweils einer Vielzahl von Schaufeln aufweist. Erfindungsgemäß sind die Hinterkanten der Schaufeln der stromaufwärtigen Schaufelreihe und die Vorderkanten der Schaufeln der stromabwärtigen Schaufelreihe in Umfangsrichtung in einem Kantenabstand angeordnet, der ausgehend von einer Hauptstrompfadmitte in Richtung zumindest einer Hauptstrombegrenzung variiert.

Durch den ausgehend von der Hauptstrompfadmitte in Richtung zumindest einer Hauptstrombegrenzung variierenden umfangsseitigen Kantenabstand wird die Positionierung der Schaufeln zueinander und deren Interaktion an die Hauptströmung im Seitenwandbereich angepasst, wodurch eine ablösungsfreie Schaufelreihendurchströmung begünstigt wird. Durch die radiale Änderung der Schaufelanordnung, erfindungsgemäß deren Umfangskantenabstand, werden geänderte Strömungsrandbedingungen im Seitenwandbereich berücksichtigt und Strömungsablösungen im Seitenwandbereich vermindert.

Bei einem Ausführungsbeispiel nimmt der Kantenabstand in Richtung der Hauptstrombegrenzung stetig zu.

Dabei kann der Kantenabstand bis zu einem Maximum zunehmen und dann abnehmen.

Alternativ kann der Kantenabstand nach dem Maximum konstant verlaufen.

Bei einem anderen Ausführungsbeispiel nimmt der Kantenabstand in Richtung der Hauptstromstrombegrenzung stetig ab.

Dabei kann der Kantenabstand bis zu einem Minimum abnehmen und dann zunehmen.

Alternativ kann der Kantenabstand nach dem Minimum konstant sein.

Bei einem weiteren Ausführungsbeispiel ist der Kantenabstand in Richtung der Hauptstrombegrenzung konstant und nimmt dann zu.

Bei einem alternativen Ausführungsbeispiel ist der Kantenabstand in Richtung der Hauptstrombegrenzung konstant und nimmt dann ab.

Grundsätzlich kann der Kantenabstand Werte bis zu einer Schaufelteilung und darüber hinaus annehmen.

Zur Realisierung des variierenden Kantenabstandes in Umfangsrichtung haben die Kanten der Schaufeln der einen Schaufelreihe einen kurvenartigen Verlauf und die Kanten der Schaufeln der anderen Schaufelreihe einen linearen Verlauf.

Bei einem alternativen Ausführungsbeispiel haben die Hinterkanten und die Vorderkanten jeweils einen kurvenartigen Verlauf.

Der Kantenabstand in Umfangsrichtung kann nur in Richtung einer der Hauptstrombegrenzungen variieren oder aber in Richtung der beiden Hauptstrombegrenzungen variieren.

Dabei kann der Kantenverlauf in Richtung der Hauptstrombegrenzungen identisch sein oder variieren.

Um eine eventuelle Asymmetrie der Kantenverläufe in Richtung einer nabenseitigen Hauptstrombegrenzung und einer gehäuseseitigen Hauptstrombegrenzung zu berücksichtigen, können die Hinterkanten und die Vorderkanten der Hauptstrompfadmitte in einem Winkel ϕ=90° oder ϕ≠90° schneiden.

Sonstige vorteilhafte Ausführungsbeispiele der Erfindung sind Gegenstand weiterer Unteransprüche.

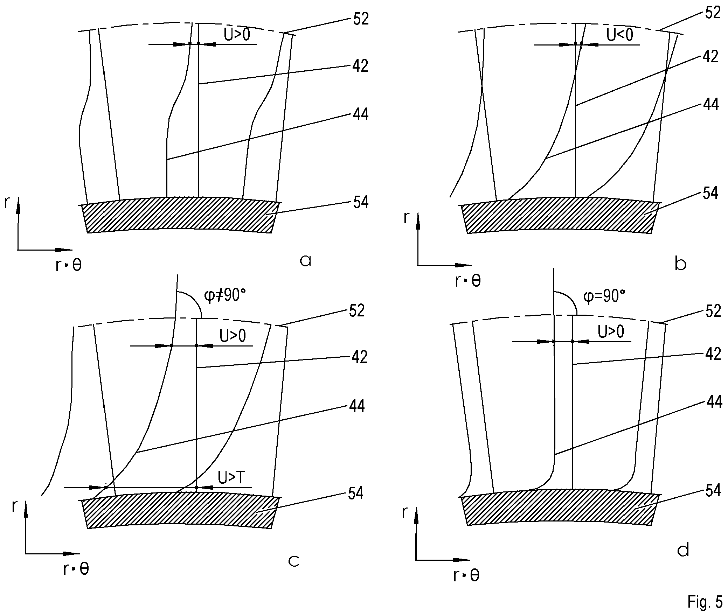

Im Folgenden werden bevorzugte Ausführungsbeispiele der Erfindung anhand schematischer Darstellungen näher erläutert, von denen die Figuren 5d, 7d, 9d, 11a bis 11d und 12 nicht zur Erfindung gehörende Ausführungen illustrieren, jedoch dem Zwecke des erleichterten Verständnisses der Erfindung dienen. Es zeigen:
Figur 1 einen Längsschnitt durch einen Hauptstrompfad einer bekannten Strömungsmaschine,
Figur 2 eine Definierung eines Kantenabstandes in Umfangsrichtung,
Figur 3 Wertbereiche des Kantenabstandes in Umfangsrichtung,
Figur 4 ein Ausführungsbeispiel einer erfindungsgemäßen Schaufelreihengruppe,
Figuren 5a, 5b und 5c Ausführungsbeispiele mit zunehmendem Kantenabstand in Umfangsrichtung,
Figur 6 Ausführungsbeispiele mit abnehmendem Kantenabstand in Umfangsrichtung,
Figuren 7a, 7b und 7c weitere Ausführungsbeispiele mit zunehmendem Kantenabstand in Umfangsrichtung,
Figur 8 weitere Ausführungsbeispiele mit abnehmendem Kantenabstand in Umfangsrichtung,
Figuren 9a, 9b und 9c weitere Ausführungsbeispiele mit zunehmendem Kantenabstand in Umfangsrichtung,
Figur 10 weitere Ausführungsbeispiele mit abnehmendem Kantenabstand in Umfangsrichtung,
Figuren 11a bis 11d nicht erfindungsgemäße Ausführungen mit einem Kantenabstand in Umfangsrichtung, der einen zu- und abnehmenden Teilverlauf oder einen ab- und zunehmenden Teilverlauf hat, und
Figur 12 eine nicht erfindungsgemäße Ausführung mit einem Kantenabstand in Umfangsrichtung, der zuerst zunimmt und dann konstant verläuft.

Im Folgenden tragen gleiche konstruktive Elemente vorrangig gleiche Bezugszeichen, wobei aus Gründen der Übersichtlichkeit nur einzelne der Elemente mit einem Bezugszeichen versehen sein können.

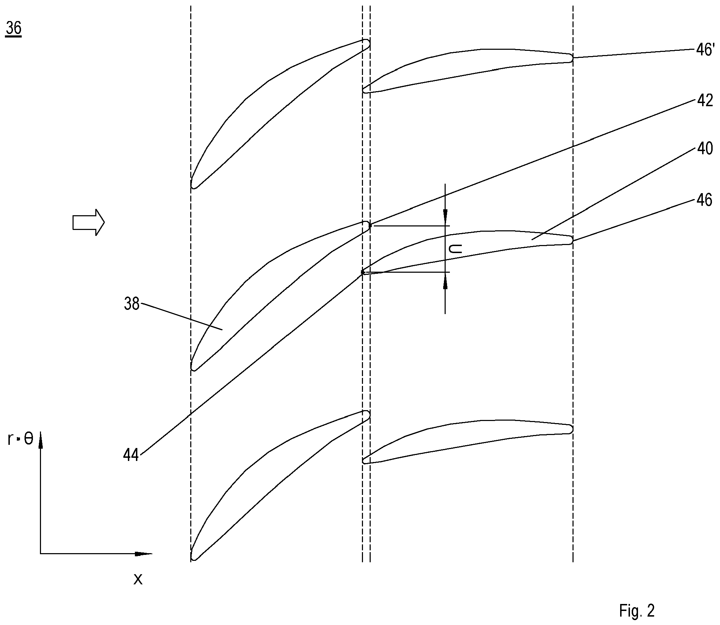

Figur 2 zeigt eine Draufsicht auf Schaufelreihengruppe 36 einer Strömungsmaschine, beispielsweise eine stationäre Gasturbine oder ein Flugzeugtriebwerk, zur Verdeutlichung eines erfindungsgemäßen Kantenabstandes U in Umfangsrichtung der Schaufelreihengruppe 36.

Die Schaufelreihengruppe 36 hat zumindest zwei in Hauptstromrichtung benachbarte Schaufelreihen mit jeweils einer Vielzahl von Schaufeln 38, 40. Der Kantenabstand U wird in Umfangsrichtung und somit quer zur Hauptstromrichtung zwischen einer Hinterkante HK(i) 42 der stromaufwärtigen bzw. vorderen Schaufel 38 und einer Vorderkante VK(i+1) 44 der stromabwärtigen bzw. hinteren Schaufel 40 abgetragen. Zudem ist in Figur 2 eine Schaufelteilung T skizziert, die zwischen Hinterkanten 46, 46' der stromabwärtigen Schaufeln 40 in Umfangsrichtung abgetragen wird.

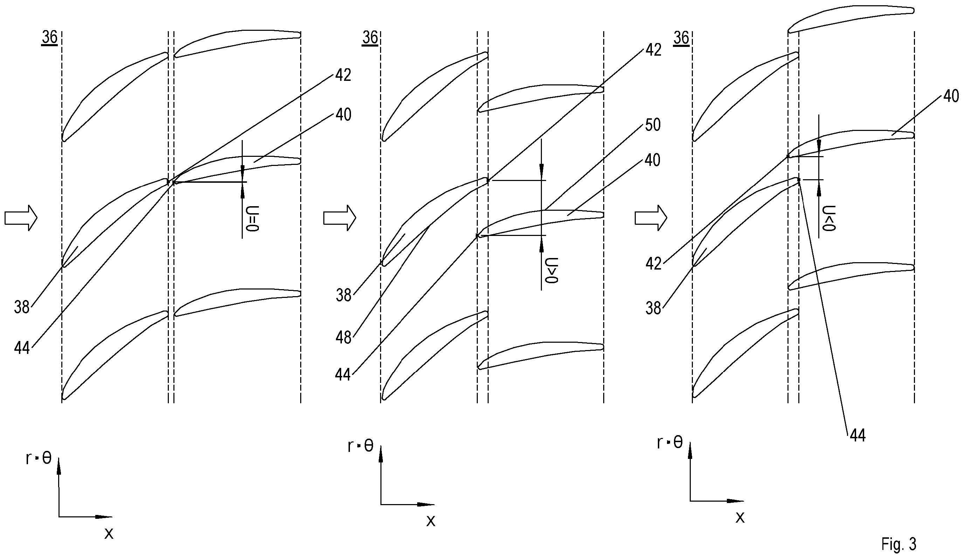

Wie in der mittleren Draufsicht in Figur 3 gezeigt, wird der Kantenabstand U positiv von einer Druckseite 48 der vorderen Schaufel 38 zur Saugseite 50 der hinteren Schaufel 40 bestimmt. Diese Definierung zugrundelegend, nimmt der Kantenabstand U positive Werte (U>0) an, wenn, wie in der mittleren Draufsicht gezeigt, die Vorderkante 44 der hinteren Schaufel 40 druckseitig der vorderen Schaufel 38 angeordnet ist. Der Kantenabstand U nimmt negative Werte (U<0) an, wenn, wie in der rechten Draufsicht gezeigt, die Vorderkante 44 der hinteren Schaufel 40 saugseitig der vorderen Schaufel 38 angeordnet ist. "Druckseitig" bedeutet in der Nähe der Druckseite 48 einer vorderen Schaufel 38 und entfernt von einer Saugseite 50 einer benachbarten vorderen Schaufel 38. "Saugseitig" bedeutet in der Nähe der Saugseite 50 einer vorderen Schaufel 38 und entfernt von einer Druckseite 48 einer benachbarten vorderen Schaufel 38. Grundsätzlich ist stets der kleinere Kantenabstand U der hinteren Schaufel 38 zu den sie quasi seitlich flankierenden vorderen Schaufeln 38 zu nehmen. Wie in der linken Darstellung gezeigt, bedeutet ein Aufeinanderliegen der Hinterkante 42 und der Vorderkante 44 einen Kantenabstand U=0.

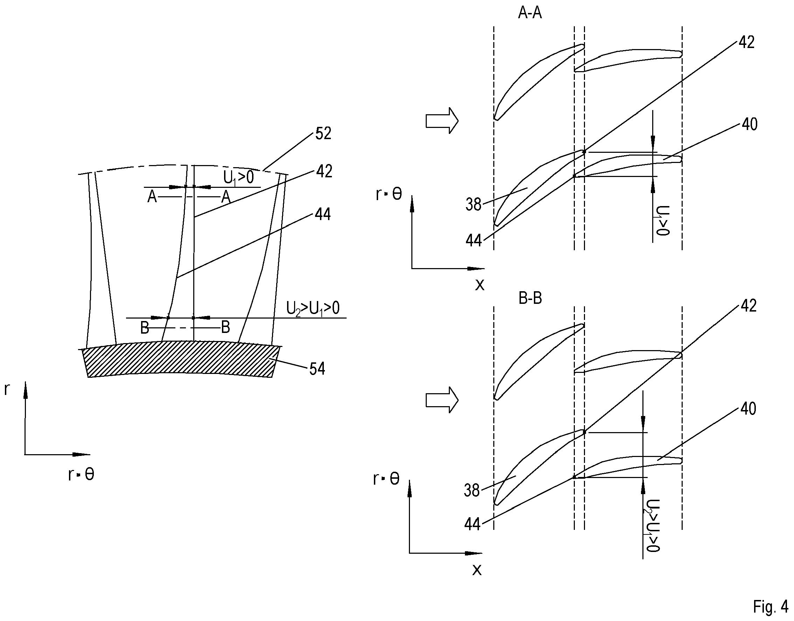

Erfindungsgemäß kann der Kantenabstand U in Umfangsrichtung von einer Hauptstrompfadmitte bzw. einer Mittelschnittlinie in Richtung einer bzw. beider Hauptstrombegrenzungen variieren. Die zumindest eine Hauptstrombegrenzung stellt einen naben- oder gehäuseseitigen Bereich der Strömungsmaschine dar und ist zum Beispiel unmittelbar ein Naben- oder Gehäuseabschnitt oder ein Schaufeldeckband. Im Folgenden werden beispielhafte Kantenverläufe in den Figuren 4 bis 12 näher erläutert. Die Variation des Kantenabstandes U bzw. der Verlauf der Kanten 42, 44 kann dabei auf jegliche Art von Beschaufelung angewandt werden. Beispiele sind Rotoren mit Spalt- oder Deckband, Statoren mit Spalt, Halbspalt oder ohne Spalt sowie Verstellstatoren. In den Figuren 4 bis 12 erfolgt die Betrachtung der Kurvenverläufe entgegen der Strömungsrichtung durch den Hauptstrompfad, so dass die Figuren 4 bis 12 quasi Rückansichten darstellen. Die Schnittdarstellungen sind in Strömungsrichtung von links nach rechts dargestellt.

Bei dem in Figur 4 gezeigten Ausführungsbeispiel nimmt der Kantenabstand U in Umfangsrichtung von der Hauptstrompfadmitte 52 in Richtung der Hauptstrombegrenzung 54 stetig zu. Die Hinterkante 42 der vorderen Schaufel 38 ist gerade bzw. linear ausgebildet. Die Vorderkante 44 der hinteren Schaufel 40 hat zur Abbildung des zunehmenden Kantenabstands U einen kurvenartigen Verlauf. Wie durch die Schnitte A-A und B-B verdeutlicht, ist die hintere Schaufel 40 druckseitig der vorderen Schaufel 38 angeordnet, so dass der Kantenabstand U über die gesamte radiale Höhe zwischen der Hauptstrombegrenzung 54 und der Hauptstrompfadmitte 52 positive Werte annimmt.

In Figur 5 sind in den Segmenten a, b und c weitere Ausführungsbeispiele gezeigt, deren Kantenabstände U in Umfangsrichtung jeweils von der Hauptstrompfadmitte 52 in Richtung der Hauptstrombegrenzung 54 zunehmen. Die vorderen Schaufeln 38 weisen jeweils eine gerade Hinterkante 42 auf. Die Vorderkanten 44 der hinteren Schaufeln 40 sind zur Variierung des Kantenabstandes U jeweils kurvenförmig ausgebildet bzw. mit einem kurvenförmigen Abschnitt versehen. Der Kantenabstand U kann, wie in den Segmenten a, c und d gezeigt, stets positive Werte annehmen und, wie insbesondere im Segment c gezeigt, im Bereich der Hauptstrombegrenzung 54 einen Wert größer als die Schaufelteilung T aufweisen. Unter dem Begriff "zunehmen" wird auch wie in dem Segment b gezeigt ein Übergang von negativen auf positive Werte verstanden. Ferner kann, wie in dem nicht zur Erfindung gehörenden Segment d gezeigt, der Kantenabstand U ausgehend von der Hauptstrompfadmitte 52 einen konstanten Wert aufweisen und erst in einem Bereich nahe der Hauptstrombegrenzung 54 zunehmen. Wie in dem Segment c beziffert, können die Vorderkanten 44 die Hauptstrompfadmitte 52 in einem Winkel ϕ≠90° schneiden. Wie in dem Segment d gezeigt, können die Vorderkanten 44 die Hauptstrompfadmitte 52 jedoch auch in einem Winkel ϕ≠90° schneiden.

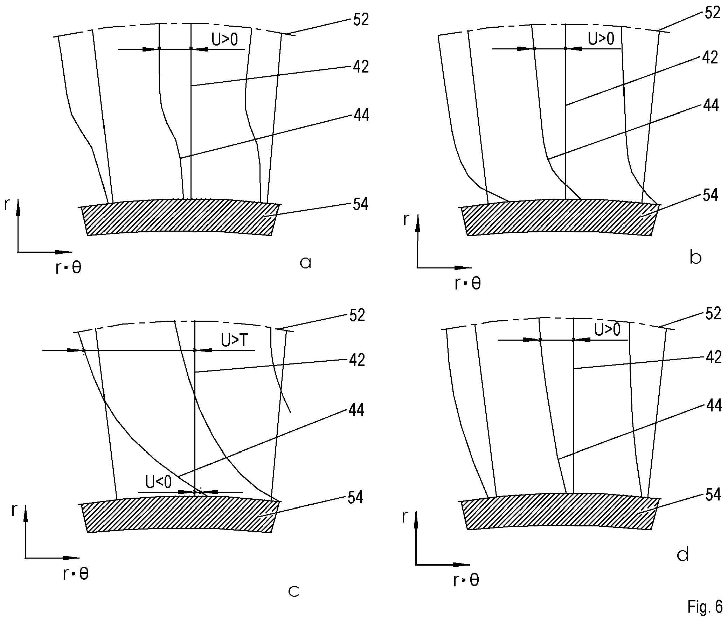

In Figur 6 sind vier Ausführungsbeispiele gezeigt, deren Kantenabstand U zwischen den Kanten 42, 44 von der Hauptstrompfadmitte 52 in Richtung der Hauptstrombegrenzung 54 stetig abnimmt. Die Hinterkanten 42 der vorderen Schaufeln 38 sind gerade ausgebildet und die Vorderkanten 44 der hinteren Schaufeln 40 sind zur Variierung des Kantenabstandes U kurvenförmig. Wie in den Segmenten b und c gezeigt, bedeutet der Begriff "abnehmen" unter anderem einen Übergang von positiven Werten im Bereich der Hauptstrompfadmitte 52 auf negative Werte in Richtung der Hauptstrombegrenzung 54. Zudem bedeutet der Begriff "abnehmen" einen betragsmäßigen Anstieg der negativen Werte. Wie zudem in dem Segment c gezeigt, kann der Kantenabstand U im Bereich der Hauptstrompfadmitte 52 einen Wert größer als die Schaufelteilung T aufweisen.

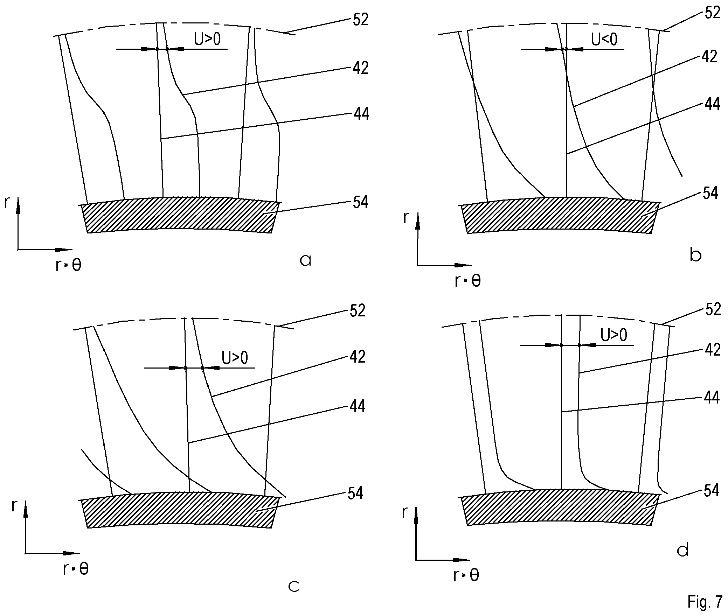

In Figur 7 sind in den Segmenten a, b und c drei weitere Ausführungsbeispiele mit einem von der Hauptstrompfadmitte 52 in Richtung der Hauptstrombegrenzung 54 zunehmenden Kantenabstand U in Umfangsrichtung gezeigt. Im wesentlichen Unterschied zu den in Figur 5 gezeigten Ausführungsbeispielen sind bei diesen Schaufelreihengruppen 36 die Vorderkante 44 der hinteren Schaufeln 40 geradlinig und die Hinterkanten 42 der vorderen Schaufeln 38 kurvenförmig ausgebildet, so dass auf die Erläuterungen zu Figur 5 verwiesen wird. Die Ausführung im Segment d ist nicht zur Erfindung gehörend.

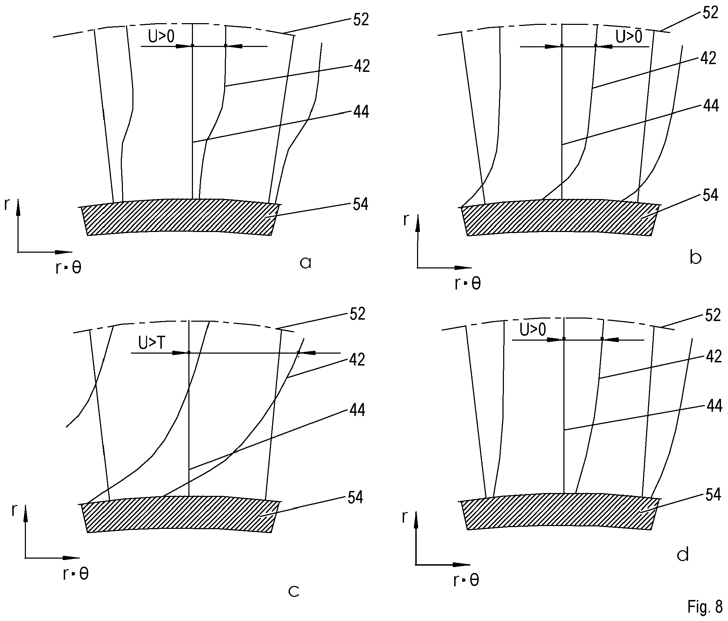

In Figur 8 sind vier weitere Ausführungsbeispiele mit einem von der Hauptstrompfadmitte 52 in Richtung der Hauptstrombegrenzung 54 abnehmenden Kantenabstand U in Umfangsrichtung gezeigt. Im wesentlichen Unterschied zu den in Figur 6 gezeigten Ausführungsbeispielen sind bei diesen Schaufelreihengruppen 36 die Vorderkanten 44 der hinteren Schaufeln 40 gerade und die Hinterkanten 42 der vorderen Schaufeln 38 kurvenförmig ausgebildet, so dass weitere Erläuterungen entfallen und auf Figur 6 verwiesen wird.

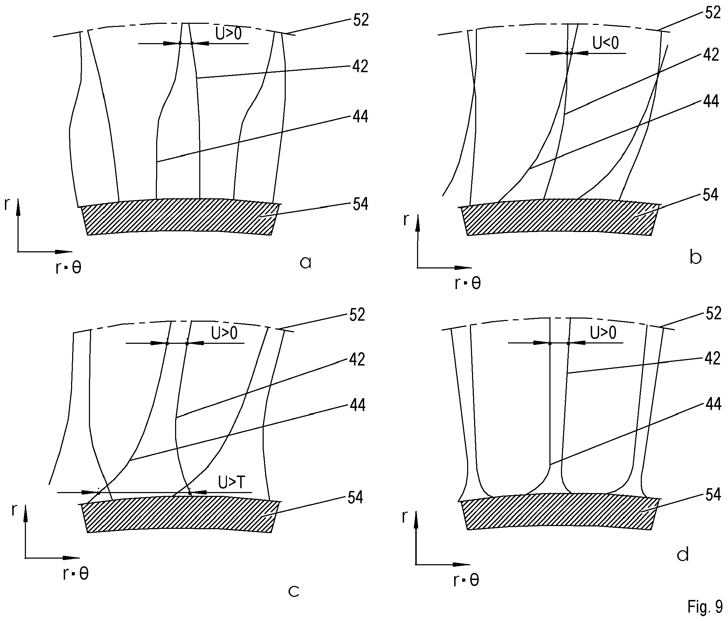

In Figur 9 sind in den Segmenten a, b und c drei weitere Ausführungsbeispiele mit einem von der Hauptstrompfadmitte 52 in Richtung der Hauptstrombegrenzung 54 stetig zunehmenden Kantenabstand U in Umfangsrichtung gezeigt. In dem Segment d ist eine nicht zur Erfindung gehörende Ausführung mit einem von der Hauptstrompfadmitte 52 abnehmenden Kantenabstand U und einem dann zunehmenden Kantenabstand U gezeigt, der sein Maximum an der Hauptstrombegrenzung 54 hat. Die vorderen Schaufeln 38 der vier Ausführungen haben jeweils eine kurvenförmige Hinterkante 42 und die hinteren Schaufeln 40 haben jeweils eine kurvenförmige Vorderkante 44.

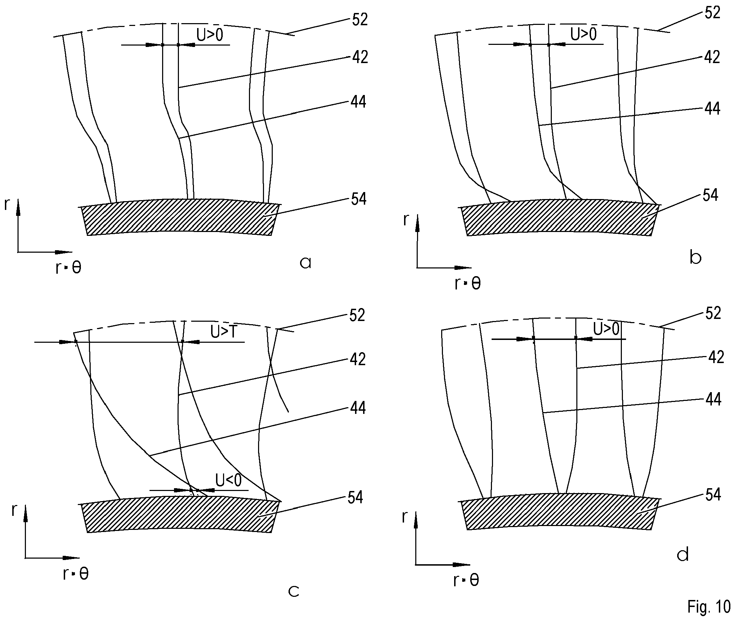

In Figur 10 sind vier weitere Ausführungsbeispiele mit kurvenförmigen Hinterkanten 42 und mit kurvenförmigen Vorderkanten 44 gezeigt, die derart zueinander angeordnet sind, dass der Kantenabstand U ausgehend von der Hauptstrompfadmitte 52 in Richtung der Hauptstrombegrenzung 54 stetig abnimmt. Zur weiteren Erläuterung vergleiche die Figuren 6 und 8.

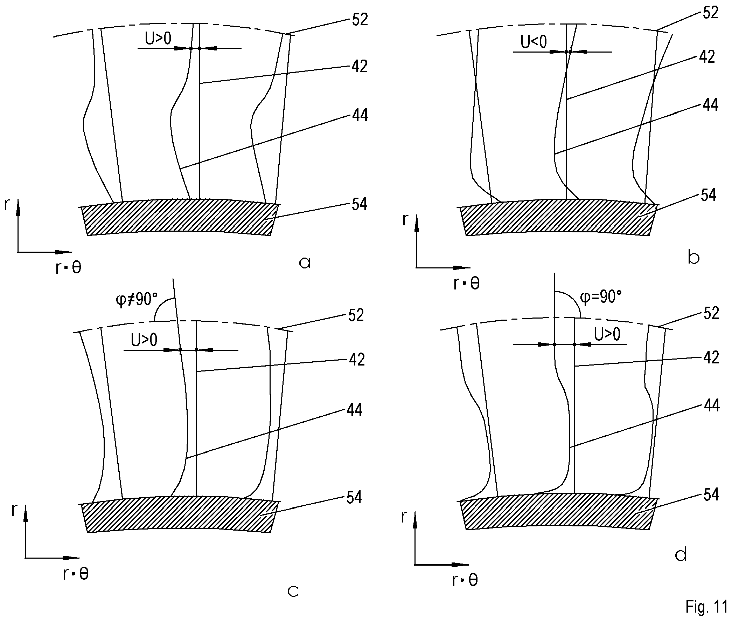

In Figur 11 sind vier nicht zur Erfindung gehörende Ausführungen gezeigt, deren Kantenabstände U in Umfangsrichtung ausgehend von der Hauptstrompfadmitte 52 nur über Bereiche einer radialen Höhe in Richtung der Hauptstrombegrenzung 54 ab- oder zunehmen, dann wieder zu- bzw. abnehmen und/oder über einen verbleibenden Höhenbereich konstant verlaufen. Dabei ist bei sämtlichen Ausführungen die Hinterkante 42 der vorderen Schaufel 38 geradlinig und die Vorderkante 44 der hinteren Schaufel 40 zur Variierung des Kantenabstandes U kurvenförmig ausgebildet. So nimmt bei der in dem Segment a gezeigten Ausführung der Kantenabstand U ausgehend von der Hauptstrompfadmitte 52 zu und dann nach Erreichen eines Maximums zu einem Minimum an der Hauptstrombegrenzung 54 hin ab, welches größer ist als der Kantenabstand U auf der Hauptstrompfadmitte 52. Bei der in dem Segment b gezeigten Ausführung nimmt der Kantenabstand U im Bereich der Hauptstrompfadmitte 52 und im Bereich der Hauptstrombegrenzung 54 negative Werte an. In einem Bereich zwischen diesen beiden negativen Wertebereichen weist der Kantenabstand U positive Werte auf. Dabei ist der Kantenabstand U an der Hauptstrombegrenzung 54 gleich bzw. nahezu gleich dem Kantenabstand U auf der Hauptstrompfadmitte 52. Bei der in dem Segment c gezeigten Ausführung nimmt der Kantenabstand U ausgehend von der Hauptstrompfadmitte 52 bis zu einem Minimum ab und dann in Richtung der Hauptstrombegrenzung 54 zu, wobei ein positives Maximum an der Hauptstrombegrenzung 54 liegt. Bei der in dem Segment d gezeigten Ausführung verlaufen die Kanten 42, 44 ausgehend von der Hauptstrompfadmitte 52 über einen Höhenbereich parallel, so dass der Kantenabstand U in diesem Bereich einen konstanten Wert annimmt. Dann wird die Vorderkante 44 über einen Kurvenabschnitt parallel in Richtung der Hinterkante 42 versetzt, so dass der Kantenabstand U einen minimalen konstanten Wert annimmt. Im Bereich der Hauptstrombegrenzung 54 wird der Kantenabstand U über einen Kurvenabschnitt der Vorderkante 44 wieder vergrößert. Der Kantenabstand U nimmt bei dieser Ausführung vorzugsweise stets positive Werte an, wobei er sein Maximum an der Hauptstrombegrenzung 54 erreicht.

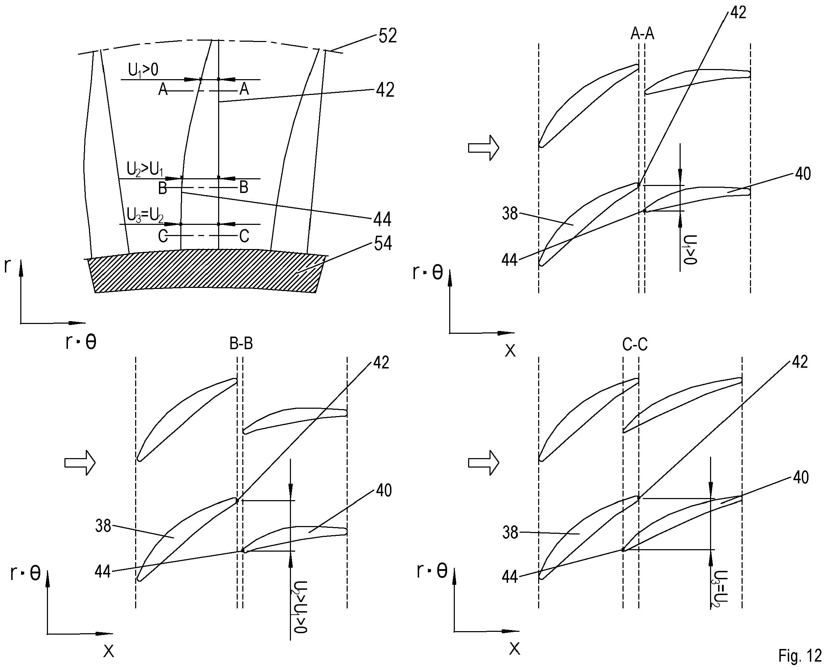

In Figur 12 ist eine nicht zur Erfindung gehörende Ausführung gezeigt, bei der der Kantenabstand U ausgehend von der Hauptstrompfadmitte 52 über einen radialen Höhenbereich in Richtung der Hauptstrombegrenzung 54 stetig zunimmt und beim Erreichen einer bestimmten radialen Höhe ein konstantes positives Maximum annimmt. Wie in den Schnitten A-A, B-B und C-C gezeigt, sind die hinteren Schaufeln 40 druckseitig der vorderen Schaufeln 38 angeordnet, so dass der Kantenabstand U stets positive Werte annimmt. Im Bereich der Hauptstrompfadmitte 52 nimmt der Kantenabstand U den Wert U₁ an. Dieser nimmt in Richtung der Hauptstrombegrenzung 54 stetig bis zu einem Wert U₂ zu. Der Wert U₂ bildet das Maximum des Kantenabstandes U und läuft konstant bis zur Hauptstrombegrenzung 54 als U₃ durch.

Offenbart ist eine Strömungsmaschine mit zumindest einer Schaufelreihengruppe, die in einem Hauptstrompfad angeordnet ist und zumindest zwei in Hauptstromrichtung betrachtet benachbarte Schaufelreihen mit jeweils einer Vielzahl von Schaufeln aufweist, wobei die Hinterkanten der Schaufeln der stromaufwärtigen Schaufelreihe und die Vorderkanten der Schaufeln der stromabwärtigen Schaufelreihe in Umfangsrichtung in einem Kantenabstand angeordnet sind, der ausgehend von einer Hauptstrompfadmitte in Richtung zumindest einer Hauptstrombegrenzung variiert.

### Bezugszeichenliste

- 2: Nabe
- 4: Gehäuse
- 6: Rotorachse
- 8: Hauptstrompfad
- 10: rotorseitige Schaufelreihengruppe
- 12: statorseitige Schaufelreihengruppe
- 14: verstellbare Schaufelreihengruppe
- 16: Schaufel
- 18: Schaufel
- 20: Blattspitze
- 22: Spalt
- 24: Drehteller
- 26: Querachse
- 28: Hinterkante
- 30: Vorderkante
- 32: Schaufel
- 34: Hauptstrompfadmitte
- 36: Schaufelreihengruppe
- 38: vordere Schaufel
- 40: hintere Schaufel
- 42: Hinterkante
- 44: Vorderkante
- 46: Hinterkante
- 48: Druckseite
- 50: Saugseite
- 52: Hauptstrompfadmitte
- 54: Hauptstrombegrenzung
- U: Kantenabstand in Umfangsrichtung
- T: Schaufelteilung

## Patentansprüche

1. Strömungsmaschine mit zumindest einer Schaufelreihengruppe (36), die in einem Hauptstrompfad angeordnet ist und zumindest zwei in Hauptstromrichtung betrachtet benachbarte Schaufelreihen mit jeweils einer Vielzahl von Schaufeln (38, 40) aufweist, wobei die Hinterkanten (42) der Schaufeln (38) der stromaufwärtigen Schaufelreihe und die Vorderkanten (44) der Schaufeln (40) der stromabwärtigen Schaufelreihe in Umfangsrichtung in einem Kantenabstand (U) angeordnet sind, der ausgehend von einer Hauptstrompfadmitte (52) in Richtung zumindest einer Hauptstrombegrenzung (54) variiert, **dadurch gekennzeichnet, dass** der Kantenabstand (U) in Richtung beider Hauptstrombegrenzungen (54) stetig zunimmt oder abnimmt.

2. Strömungsmaschine nach Anspruch 1, wobei der Kantenabstand (U) mindestens bis zu einer Schaufelteilung zu- oder abnimmt.

3. Strömungsmaschine nach einem der vorhergehenden Ansprüche, wobei die Kanten (42,44) der Schaufeln (38, 40) der einen Schaufelreihe einen kurvenartigen Verlauf und die Kanten (42,44) der Schaufeln (38, 40) der anderen Schaufelreihe einen linearen Verlauf haben.

4. Strömungsmaschine nach einem der Ansprüche 1 bis 3, wobei die Hinterkanten (42) und die Vorderkanten (44) einen kurvenartigen Verlauf haben.

5. Strömungsmaschine nach einem der vorhergehenden Ansprüche, wobei die Hinterkanten (42) und die Vorderkanten (44) die Hauptstrompfadmitte (52) in einem Winkel ϕ=90° oder ϕ≠90° schneiden.

## Claims

1. A turbomachine comprising at least one blade row group (36), which is arranged in a main flow path and has at least two blade rows, which are adjacent when observed in the main flow direction, each having a plurality of blades (38, 40), wherein the rear edges (42) of the blades (38) of the upstream blade row and the front edges (44) of the blades (40) of the downstream blade row are arranged at an edge spacing (U) in the circumferential direction which varies in the direction of at least one main flow boundary (54) proceeding from a main flow path sensor (52), **characterized in that** the edge spacing (U) continuously increases or decreases in the direction of both main flow boundaries (54).

2. The turbomachine as claimed in claim 1, wherein the edge spacing (U) increases or decreases at least up to a blade pitch.

3. The turbomachine as claimed in any one of the preceding claims, wherein the edges (42, 44) of the blades (38, 40) of one blade row have a curved profile and the edges (42, 44) of the blades (38,40) of the other blade row have a linear profile.

4. The turbomachine as claimed in any one of claims 1 to 3, wherein the rear edges (42) and the front edges (44) have a curved profile.

5. The turbomachine as claimed in any one of the preceding claims, wherein the rear edges (42) and the front edges (44) intersect the main flow path center (52) at an angle ϕ = 90° or ϕ ≠ 90°.

## Revendications

1. Turbomachine avec au moins un groupe de rangées d'aubes (36), qui est agencé dans un chemin de flux principal et présente au moins deux rangées d'aubes voisines vues dans la direction du flux principal avec respectivement une pluralité d'aubes (38, 40), dans laquelle les bords de fuite (42) des aubes (38) de la rangée d'aubes en amont du flux et les bords d'attaque (44) des aubes (40) de la rangée d'aubes en aval du flux sont agencés dans le sens périphérique à une distance entre bords (U), qui partant d'un milieu de chemin de flux principal (52) en direction d'au moins une limitation de flux principal (54) varie, **caractérisée en ce que** la distance entre bords (U) en direction des deux limitations de flux principal (54) augmente ou diminue constamment.

2. Turbomachine selon la revendication 1, dans laquelle la distance entre bords (U) augmente ou diminue au moins jusqu'à un pas d'aube.

3. Turbomachine selon l'une quelconque des revendications précédentes, dans laquelle les bords (42, 44) des aubes (38, 40) d'une rangée d'aubes ont une allure courbe et les bords (42, 44) des aubes (38, 40) de l'autre rangée d'aubes ont une allure linéaire.

4. Turbomachine selon l'une quelconque des revendications 1 à 3, dans laquelle les bords de fuite (42) et les bords d'attaque (44) ont une allure courbe.

5. Turbomachine selon l'une quelconque des revendications précédentes, dans laquelle les bords de fuite (42) et les bords d'attaque (44) coupent le milieu de chemin de flux principal (52) suivant un angle ϕ=90° ou ϕ≠90°.
